(19) Europäisches Patentamt / European Patent Office / Office européen des brevets

(11) **EP 3 852 106 B1**

(12) **EUROPEAN PATENT SPECIFICATION**

(45) Date of publication and mention
of the grant of the patent:
**02.07.2025 Bulletin 2025/27**

(21) Application number: **19866634.9**

(22) Date of filing: **24.05.2019**

(51) International Patent Classification (IPC):
**G10L 25/78** (2013.01)   **G10L 21/02** (2013.01)
**G10L 21/0272** (2013.01)   **G10L 21/0208** (2013.01)
**G06V 40/16** (2022.01)   **H04M 1/72403** (2021.01)

(52) Cooperative Patent Classification (CPC):
**G10L 21/02; G06V 40/161; H04M 1/72403;**
G10L 21/0208; G10L 21/0272; G10L 25/57;
G10L 25/78; H04M 2250/52

(86) International application number:
**PCT/CN2019/088302**

(87) International publication number:
**WO 2020/062900 (02.04.2020 Gazette 2020/14)**

(54) **SOUND PROCESSING METHOD, APPARATUS AND DEVICE**

VERFAHREN, GERÄT UND VORRICHTUNG ZUR TONVERARBEITUNG

PROCÉDÉ, APPAREIL ET DISPOSITIF DE TRAITEMENT DU SON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2018 CN 201811152007**

(43) Date of publication of application:
**21.07.2021 Bulletin 2021/29**

(73) Proprietor: HUAWEI TECHNOLOGIES CO., LTD.
**Shenzhen, Guangdong 518129 (CN)**

(72) Inventors:
• **LIU, Zhenyi**
  **Shenzhen, Guangdong 518129 (CN)**
• **ZHAO, Wenbin**
  **Shenzhen, Guangdong 518129 (CN)**
• **LI, Feng**
  **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 104 376 847    CN-A- 105 245 811
CN-A- 105 469 802    CN-A- 105 578 097
US-A1- 2003 099 370  US-A1- 2012 154 632
US-A1- 2014 002 574  US-A1- 2015 022 636
US-A1- 2015 022 636  US-A1- 2015 245 133

## Description

## TECHNICAL FIELD

The present invention relates to the field of terminal technologies, and in particular, to a voice processing method and apparatus, and a device.

## BACKGROUND

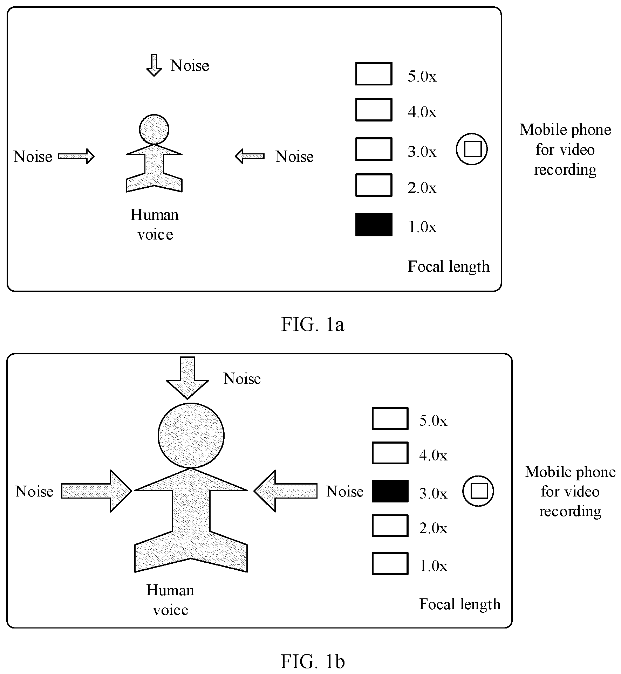

With development of terminal technologies, some intelligent terminals begin to be integrated with an audio zoom function. So-called audio zoom may be similar to image zoom, which means that when a user records a video by using a mobile phone, a recorded voice can be moderately amplified when a relatively distant picture is recorded, and the recorded voice can be moderately reduced when a relatively close picture is recorded. That is, a volume of the recorded video varies with a distance of a recorded picture. In some application scenarios, a volume of a video can be adjusted through zoom adjustment. For example, if a video of several people speaking is recorded, a voice of a person in the video can be separately specified to be amplified. For example, there is an HTC U12+ audio zoom technology in the industry. When focal length information of a mobile phone is changed during video recording, a recorded voice is amplified or reduced with a change in a focal length, to implement audio zoom. Specifically, as shown in FIG. 1a and FIG. 1b, when a mobile phone changes from a 1.0x video recording focal length shown in FIG. 1a to a 3.0x video recording focal length shown in FIG. 1b during video recording, voice intensity of all voices, including noise and a human voice, in a recorded video is amplified by several times, and the reverse is also true.

Intelligent terminals are increasingly widely used, especially those with a portable video call function and a portable video recording function, which makes human voice zoom enhancement become an important scenario in the audio zoom. The human voice zoom enhancement means that a human voice part in a recorded voice can be amplified or reduced to different degrees.

In a specific application, for example, during video recording with a mobile phone, a user expects that adaptive audio zoom is implemented for a human voice in a recording environment, and when human voice zoom is performed, background noise can remain stable and does not change with the human voice. However, currently in the industry, zoom enhancement of an audio input of a mobile phone only stays at a stage that all voices are zoomed. To be specific, voices of all voice sources in images of a front-facing camera or a rear-facing camera are uniformly amplified or reduced. For example, a recorded voice includes noise and a human voice. The noise is also amplified or reduced synchronously. Consequently, a signal-to-noise ratio in a final output voice is not greatly increased, and subjective listening experience of the human voice is not significantly improved. In addition, implementation of the human voice zoom depends on a specific input of a user to a mobile phone, for example, a user needs to perform a gesture operation to zoom out or zoom in a recorded picture, or press a key to adjust focal length information of recorded video/recorded audio. With these inputs, the audio zoom is easier to implement. Provided that a distance of a human voice in a picture is determined based on only the given focal length information, voice source intensity is then amplified or reduced. However, as a result, an input of the user needs to be strongly relied on, and adaptive processing cannot be implemented. When a person who makes a sound in the recorded picture moves from a near position to a far position and if the user does not think that it is necessary to change a focal length, the focal length of the video does not change, and the audio zoom does not take effect. However, in this case, the voice of the person has already been reduced, but the zoom is not performed in the case that the zoom is required. Therefore, a user operation cannot adapt to a scenario in which the person moves forward and backward. In addition, if the user adjusts the focal length by misoperation, a voice source is also zoomed by misoperation. Consequently, user experience is poor.

In conclusion, the conventional technology has the following disadvantages:

(1) The noise and the human voice cannot be distinguished. Therefore, the noise and the human voice are amplified or reduced together, and the subjective listening experience of the human voice that the user is more interested in is not significantly improved.

(2) The audio zoom depends on an external input, and this cannot free the user.

(3) The user operation cannot adapt to a scenario in which a person who makes a sound moves forward and backward in the video, and a misoperation is likely to be caused.

US2015/245133 describes systems, devices, and methods for recognizing and focusing on at least one source of an audio communication as part of a communication including a video image and an audio communication derived from two or more microphones when a relative position between the microphones is known. I

US2015/022636 describes determining a face direction associated with a detected subject (or multiple detected subjects) of interest within a 3D space using face detection procedures.

US2012/154632 describes an audio data synthesizing apparatus including an imaging unit that captures an optical image through the use of an optical system.

US2003/099370 describes a hearing aid which includes an image sensing device, a sound input transducer, a sound output transducer, and a processor. US2014/002574 describes a video communication device and method, wherein the volume of the audio signal is adjusted based on the distance between the user face and the device.

## SUMMARY

The present invention is defined by the appended claims. Embodiments not falling within the scope are exemplary. The present invention provides a voice processing method, and specifically, provides an intelligent human voice zoom enhancement method, to adaptively distinguish between recording scenarios. For non-human voice scenarios (such as concerts and outdoor scenarios), ambient noise and noise impact are reduced under a premise of fidelity recording, and then audio zoom is performed. For human voice scenarios (such as conferences and speeches), noise reduction is performed when human voice enhancement is performed. Based on this, adaptive human voice zoom may be further implemented based on a distance between a person who makes a sound and a shooting terminal, without a need of a user-specific real-time input. In addition, other interference noise is suppressed while a human voice is enhanced, thereby significantly improving subjective voice listening experience of human voices at different distances in a shot video.

Specific technical solutions provided in embodiments of the present invention are as follows.

According to a first aspect, an embodiment of the present invention provides a voice processing method. The method specifically includes: when a terminal records a video, performing face detection on a current video frame, and performing voice detection on a current audio frame; when it is detected that the current video frame includes a face and that the current audio frame includes a voice, that is, in a human voice scenario, determining a target face in the current video frame; obtaining a target distance between the target face and the terminal; determining a target gain based on the target distance, where a larger target distance indicates a larger target gain; separating a voice signal from a voice signal of the current audio frame; and performing enhancement processing on the voice signal based on the target gain, to obtain a target voice signal.

According to a second aspect, an embodiment of the present invention provides a voice processing apparatus. The apparatus specifically includes: a detection module, configured to: when a terminal records a video, perform face detection on a current video frame, and perform voice detection on a current audio frame; a first determining module, configured to: when the detection module detects that the current video frame includes a face and that the current audio frame includes a voice, determine a target face in the current video frame; an obtaining module, configured to obtain a target distance between the target face and the terminal; a second determining module, configured to determine a target gain based on the target distance, where a larger target distance indicates a larger target gain; a separation module, configured to separate a voice signal from a voice signal of the current audio frame; and a voice enhancement module, configured to perform enhancement processing on the voice signal based on the target gain, to obtain a target voice signal.

It should be understood that the current video frame may be understood as a frame of an image that is being recorded at a time point, and the current audio frame may be understood as a voice that is of a sampling interval and that is being picked up at the time point. The time point herein may be understood as a general time point in some scenarios. In some scenarios, the time point may also be understood as a specific time point, for example, a latest time point or a time point in which a user is interested. The current video frame and the current audio frame may have respective sampling frequencies, and time points corresponding to the current video frame and the current audio frame are not limited. In an implementation process, a face is determined at a frequency in a video frame, and the video frame may be transmitted at a frequency of an audio frame to an audio module for processing.

The technical solutions of the foregoing method and apparatus provided in the embodiments of the present invention may be specific to a terminal video recording scenario. In the human voice scenario, technologies such as face detection and voice detection are used to perform voice noise separation on a voice signal. Then, a voice can be separately enhanced based on estimation of a distance between a face and a mobile phone without depending on a user input. In this way, adaptive zoom enhancement of the voice is implemented, environmental noise is reduced, and stability of noise in a zoom process is maintained.

According to the first aspect or the second aspect, in a possible design, the method further includes: separating a non-voice signal from the voice signal of the current audio frame; weakening the non-voice signal based on a preset noise reduction gain, to obtain a target noise signal, where the preset noise reduction gain is less than 0 dB, in other words, a preset amplitude of the non-voice signal is reduced, for example, only 25%, 10%, or 5% of an original amplitude is retained, and this is not exhaustive or limited in the present invention; and synthesizing the target voice signal and the target noise signal, to obtain a target voice signal of a current frame. Correspondingly, the apparatus further includes a noise reduction module and a synthesis module. The separation module is specifically configured to separate a non-voice signal from the voice signal of the current audio frame; the noise reduction module is configured to weaken the non-voice signal based on a preset noise reduction gain, to obtain a target noise signal; and the synthesis module is configured to synthesize the target voice signal and the target noise signal, to obtain a target voice signal of a current frame. The technical solution is used to weaken the non-voice signal, and superimpose a weakened non-voice signal on an enhanced voice signal to ensure reality of the voice signal.

According to the first aspect or the second aspect, in a possible design, the determining a target face in the current video frame includes: if a plurality of faces exist in the current video frame, determining a face with a largest area as the target face. The method may be performed by the first determining module.

According to the first aspect or the second aspect, in a possible design, the determining a target face in the current video frame includes: if a plurality of faces exist in the current video frame, determining a face closest to the terminal as the target face. The method may be performed by the first determining module.

According to the first aspect or the second aspect, in a possible design, the determining a target face in the current video frame includes: if only one face exists in the current video frame, determining the face as the target face. The method may be performed by the first determining module.

According to the first aspect or the second aspect, in a possible design, the obtaining a target distance between the target face and the terminal includes but is not limited to one of the following manners.

Manner 1: A region area of the target face is calculated, a ratio of the region area of the target face to a screen of the mobile phone, namely, a face-to-screen ratio of the target face, is calculated, and an actual distance between the target face and the terminal is calculated based on the face-to-screen ratio of the target face. Specifically, a correspondence between an empirical value of a face-to-screen ratio of a face and an empirical value of a distance between the face and the terminal may be obtained through historical statistics or an experiment. A distance between the target face and the terminal may be obtained based on the correspondence and an input of the face-to-screen ratio of the target face.

Manner 2: A region area of the target face is calculated, and a distance between the target face and the terminal is obtained based on a function relationship between a region area of a face and a distance between the face and the terminal.

Manner 3: Two inputs of a dual-camera mobile phone are used to perform bijective ranging, and a distance between the target face and the terminal is calculated.

Manner 4: A depth component, for example, a structured light component, in the terminal is used to measure a distance between the target face and the terminal.

According to the first aspect or the second aspect, in a possible design, the target gain is greater than 0 dB, and the target gain is less than 15 dB; and/or the preset noise reduction gain is less than -12 dB. This technical solution ensures that the voice signal is not excessively enhanced, and the non-voice signal/a noise signal is weakened. If an enhanced voice signal and the weakened noise signal are synthesized, it can be ensured that the enhanced voice signal does not lose a sense of reality.

According to the first aspect or the second aspect, in a possible design, in a non-human voice scenario, that is, the current video frame/image does not include a face, or the current audio frame does not include a voice, audio fidelity enhancement processing may be implemented through fidelity recording enhancement and fidelity audio zoom enhancement.

According to the first aspect or the second aspect, in a possible design, the terminal includes a top microphone and a bottom microphone.

According to the first aspect or the second aspect, in a possible design, the target gain may be determined based on the target distance by using a DRC curve method or another empirical value design method.

More specifically, in the foregoing possible technical implementation, a processor may invoke programs and instructions in a memory to perform corresponding processing. For example, the processor controls a camera to capture an image and a microphone to pick up a voice, and performs specific analysis on the captured image and the collected voice. In the human voice scenario, the processor performs specific processing on the voice signal to enhance a human voice or a voice in the voice signal and reduce noise.

According to a third aspect, an embodiment of the present invention provides a terminal device, including a memory, a processor, a bus, a camera, and a microphone. The memory, the camera, the microphone, and the processor are connected through the bus. The camera is configured to capture an image signal under control of the processor. The microphone is configured to collect a voice signal under control of the processor. The memory is configured to store computer programs and instructions. The processor is configured to invoke the computer programs and the instructions that are stored in the memory, to control the camera and the microphone; and is further specifically configured to enable the terminal device to perform any one of the foregoing possible design methods.

According to the third aspect, in a possible design, the terminal device further includes an antenna system. The antenna system receives and sends a wireless communication signal under control of the processor, to implement wireless communication with a mobile communications network. The mobile communications network includes one or more of the following: a GSM network, a CDMA network, a 3G network, a 4G network, a 5G network, an FDMA network, a TDMA network, a PDC network, a TACS network, an AMPS network, a WCDMA network, a TDSCDMA network, a Wi-Fi network, and an LTE network.

It should be understood that, on a premise of not violating a natural law, the foregoing solutions may be freely combined, or may include more or fewer steps. This is not limited in the present invention. The summary includes at least all corresponding implementation methods in the claims, and details are not described herein.

The foregoing method, apparatus, and device may be applied to a scenario in which a photographing program embedded in a terminal is used to record a video, or may be applied to a scenario in which third-party photographing software is run on a terminal to record a video. In addition, the present invention is further applicable to the video call mentioned in the background and a more general scenario of real-time video stream collection and transmission. It should be understood that, with emergence of devices such as a smart large-screen device and a foldable screen device, the method also has wider application scenarios.

## BRIEF DESCRIPTION OF DRAWINGS

FIG. 1a and FIG. 1b respectively show a 1.0x video recording focal length and a 3.0x video recording focal length during video recording by using a mobile phone;
FIG. 2 is a schematic diagram of a structure of a terminal according to an embodiment of the present invention;
FIG. 3 is a schematic diagram of a microphone layout of a terminal according to an embodiment of the present invention;
FIG. 4 is a schematic diagram of an application scenario of video recording according to an embodiment of the present invention;
FIG. 5 is a flowchart of a voice processing method according to an embodiment of the present invention;
FIG. 6 is a schematic diagram of a method for detecting a human voice environment according to an embodiment of the present invention;
FIG. 7 is a schematic diagram of a fidelity recording enhancement method according to an embodiment of the present invention;
FIG. 8 is a schematic diagram of a human voice separation method according to an embodiment of the present invention;
FIG. 9 is a schematic diagram of directional beam enhancement according to an embodiment of the present invention;
FIG. 10 is a schematic module diagram of a neural network according to an embodiment of the present invention;
FIG. 11 is a flowchart of a voice processing method according to an embodiment of the present invention; and
FIG. 12 is a schematic diagram of a voice processing apparatus according to an embodiment of the present invention.

## DESCRIPTION OF EMBODIMENTS

The following clearly describes the technical solutions in embodiments of the present invention with reference to the accompanying drawings in the embodiments of the present invention. It is clear that the described embodiments are merely some but not all of the embodiments of the present invention. All other embodiments obtained by persons of ordinary skill in the art based on the embodiments of the present invention without creative efforts shall fall within the protection scope of the present invention.

In the embodiments of the present invention, a terminal may be a device that provides a user with video shooting and/or data connectivity, a handheld device with a wireless connection function, or another processing device connected to a wireless modem, for example, a digital camera, a single-lens reflex camera, a mobile phone (or referred to as a "cellular" phone), or a smartphone. The terminal may be a portable, pocket-sized, handheld, or wearable device (for example, a smartwatch), a tablet computer, a personal computer (PC, Personal Computer), a PDA (Personal Digital Assistant), a vehicle-mounted computer, a drone, an aerial device, or the like. It should be understood that the terminal may further include an emerging foldable terminal device, a smart large-screen device, a smart television, or the like. A specific form of the terminal is not limited in the present invention.

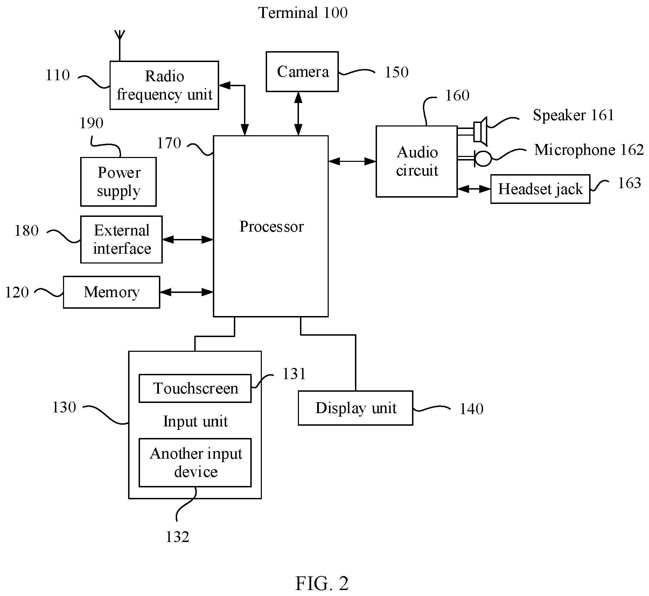

For example, FIG. 2 is a schematic diagram of an optional hardware structure of a terminal 100.

Referring to FIG. 2, the terminal 100 may include components such as a radio frequency unit 110, a memory 120, an input unit 130, a display unit 140, a camera 150, an audio circuit 160, a speaker 161, a microphone 162, a processor 170, an external interface 180, and a power supply 190. Persons skilled in the art may understand that FIG. 2 is merely an example of an intelligent terminal or a multi-functional device, and does not constitute a limitation on the intelligent terminal or the multi-functional device. The intelligent terminal or the multi-functional device may include more or fewer components than those shown in the figure, or combine some components, or include different components.

The camera 150 is configured to capture an image or a video, and may be triggered to be enabled by using an application program instruction, to implement a photographing function or a video shooting function. The camera may include components such as an imaging lens, a light filter, and an image sensor. Light rays emitted or reflected by an object enter the imaging lens and finally converge on the image sensor through the light filter. The imaging lens is mainly configured to converge, into an image, light emitted or reflected by all objects (which may also be referred to as a to-be-shot scene, to-be-shot objects, a target scene, or target objects, and may also be understood as a scene image that a user expects to shoot) in a photographing angle of view. The light filter is mainly configured to filter out a redundant light wave (for example, a light wave other than visible light, for example, infrared light) in light rays. The image sensor is mainly configured to: perform optical-to-electrical conversion on a received optical signal, convert the optical signal into an electrical signal, and input the electrical signal to the processor 170 for subsequent processing. The camera may be located in the front of the terminal device, or may be located on the back of the terminal device. A specific quantity and a specific arrangement manner of cameras may be flexibly determined based on a requirement of a designer or a vendor policy. This is not limited in this application.

The input unit 130 may be configured to: receive input number or character information, and generate a key signal input related to user settings and function control of the portable multi-functional apparatus. Specifically, the input unit 130 may include a touchscreen 131 and/or another input device 132. The touchscreen 131 may collect a touch operation (for example, an operation performed by the user on the touchscreen or near the touchscreen by using any proper object, for example, a finger, a joint, or a stylus) of the user on or near the touchscreen 131, and drive a corresponding connection apparatus based on a preset program. The touchscreen may detect a touch action of the user on the touchscreen, convert the touch action into a touch signal, send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in various types such as a resistive type, a capacitive type, an infrared type, and a surface acoustic wave type. In addition to the touchscreen 131, the input unit 130 may further include the another input device. Specifically, the another input device 132 may include but is not limited to one or more of a physical keyboard, a function key (for example, a volume control key or a power on/off key), a trackball, a mouse, a joystick, and the like.

The display unit 140 may be configured to display information input by the user or information provided for the user, various menus of the terminal 100, an interaction interface, file display, and/or playing of any multimedia file. In this embodiment of the present invention, the display unit is further configured to display the image or the video obtained by the device by using the camera 150. The image or the video may include a preview image/a preview video in some shooting modes, a shot initial image/shot initial video, and a target image or a target video on which a specific algorithm is processed after shooting is performed.

Further, the touchscreen 131 may cover a display panel. After detecting the touch operation on or near the touchscreen 131, the touchscreen 131 transfers the touch operation to the processor 170 to determine a type of a touch event. Then, the processor 170 provides a corresponding visual output on the display panel 141 based on the type of the touch event. In this embodiment, the touchscreen and the display unit may be integrated into one component to implement input, output, and display functions of the terminal 100. For ease of description, in this embodiment of the present invention, a touch display screen represents a function set of the touchscreen and the display unit. In some embodiments, the touchscreen and the display unit may alternatively be used as two independent components.

The memory 120 may be configured to store instructions and data. The memory 120 may mainly include an instruction storage area and a data storage area. The data storage area may store data such as a media file and text. The instruction storage area may store software units such as an operating system, an application, and instructions required by at least one function, or a subset and an extension set of the software units. The memory 120 may further include a non-volatile random access memory and provide the processor 170 with functions including managing hardware, software, and data resources in a computing processing device and supporting control on the software and an application. The memory 120 is further configured to store a multimedia file, and store an execution program and an application.

The processor 170 is a control center of the terminal 100, and is connected to various parts of the entire mobile phone through various interfaces and lines. The processor 170 performs various functions and data processing of the terminal 100 by running or executing the instructions stored in the memory 120 and invoking the data stored in the memory 120, to perform overall control on the mobile phone. Optionally, the processor 170 may include one or more processing units. Preferably, the processor 170 may be integrated with an application processor and a modem processor. The application processor mainly processes an operating system, a user interface, an application program, and the like. The modem processor mainly processes wireless communication. It may be understood that the modem processor may alternatively not be integrated into the processor 170. In some embodiments, the processor and the memory may alternatively be implemented on a single chip. In some embodiments, the processor and the memory may be separately implemented on independent chips. The processor 170 may be further configured to: generate a corresponding operation control signal, send the operation control signal to a corresponding component in the computing processing device, and read and process data in software, especially read and process the data and the program in the memory 120. Therefore, functional modules in the processor 170 perform corresponding functions, to control the corresponding component to perform an action as required by an instruction.

The radio frequency unit 110 may be configured to receive and send information or receive and send a signal in a call process. For example, the radio frequency unit 110 receives downlink information from a base station, sends the downlink information to the processor 170 for processing, and sends related uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communications standard or protocol, including but not limited to a global system for mobile communications (global system for mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (short message service, SMS), and the like.

The audio circuit 160, the speaker 161, and the microphone 162 may provide an audio interface between the user and the terminal 100. The audio circuit 160 may convert received audio data into an electrical signal, and transmit the electrical signal to the speaker 16; and the speaker 161 converts the electrical signal into a voice signal for outputting. In addition, the microphone 162 is configured to collect a voice signal, and may further convert the collected voice signal into an electrical signal. The audio circuit 160 receives the electrical signal, converts the electrical signal into audio data, outputs the audio data to the processor 170 for processing, and then sends processed audio data to, for example, another terminal through the radio frequency unit 110, or outputs the audio data to the memory 120 for further processing. The audio circuit may also include a headset jack 163, configured to provide a connection interface between the audio circuit and a headset.

The terminal 100 further includes the power supply 190 (for example, a battery) that supplies power to each component. Preferably, the power supply may be logically connected to the processor 170 by using a power management system, to implement functions such as charging, discharging, and power consumption management by using the power management system.

The terminal 100 further includes the external interface 180. The external interface may be a standard micro-USB port, or may be a multi-pin connector. The external interface may be configured to connect the terminal 100 to another apparatus for communication, or may be configured to connect to a charger to charge the terminal 100.

Although not shown, the terminal 100 may further include a flash light, a wireless fidelity (wireless fidelity, Wi-Fi) module, a Bluetooth module, sensors with different functions, and the like. Details are not described herein. A part or all of methods described below may be applied to the terminal shown in FIG. 2.

The present invention may be applied to a mobile terminal device with an audio and video recording function, and a product form for implementation may be an intelligent terminal (a mobile phone, a tablet, a DV, a video camera, a camera, a portable computer, or the like) or a home camera (a smart camera/a visual set-top box/a smart loudspeaker), and may be specifically an application program or software on the intelligent terminal or the home camera. The present invention is deployed on the terminal device, and provides a voice processing function through software installation or upgrade and hardware invocation and collaboration.

Specifically, a hardware composition implementation may be as follows: An intelligent terminal includes at least two analog or digital microphones, and can implement a normal microphone voice pickup function. Data collected by the microphone may be obtained by using a processor or an operating system, and is stored in memory space, so that the processor performs further processing and calculation. At least one camera is available for normally recording a video. The present invention may be applied to a front-facing camera or a rear-facing camera of a terminal for video recording enhancement. A premise is that the terminal correspondingly includes the front-facing camera or the rear-facing camera. Alternatively, the terminal may include a camera of a foldable screen. A location is not limited.

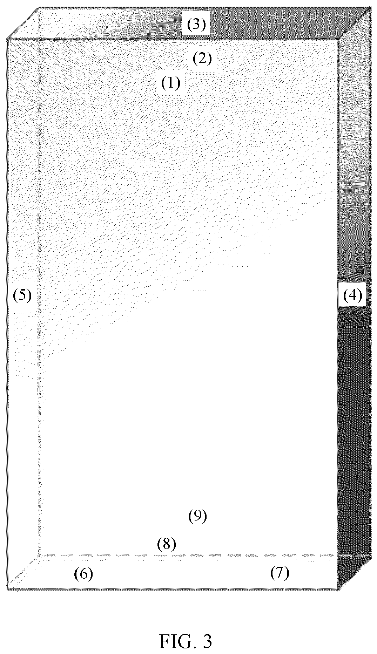

A specific layout requirement of the microphone is shown in FIG. 3. Microphones may be disposed on all six surfaces of the intelligent terminal, as shown by (1) to (9) in the figure. In an implementation, the terminal may include at least one of a top microphone (1) (at the front top), a top microphone (2) (at the back top), and a top microphone (3) (on the top surface), and at least one of a bottom microphone (6) (at the bottom left), a bottom microphone (7) (at the bottom right), a bottom microphone (8) (at the front bottom), and a bottom microphone (9) (at the back bottom). It should be understood that, for the foldable screen, a position of a microphone may change or may not change during folding. Therefore, a physical position of the microphone does not constitute any limitation. When an algorithm is implemented, the position may be equivalent, and details are not described in the present invention.

A typical application scenario is that the intelligent terminal includes at least the microphone (3) and the microphone (6) shown in FIG. 3. In addition, the intelligent terminal may further include a front-facing camera (single-camera or dual-camera) and/or a rear-facing camera (single-camera, dual-camera, or triple-camera), and a non-planar terminal may alternatively include only one single-camera. The foregoing structure may be used as a basis for implementing intelligent human voice zoom enhancement processing during terminal video shooting according to the present invention.

In an application scenario of the present invention, in a process in which a user records a video (in a broad sense, video recording may include scenarios with real-time video stream collection, such as video shooting and a video call in a narrow sense), if a person makes a sound in a video recording scenario, it is expected that the human voice in the video can be enhanced, and noise in an ambient environment can be reduced. Noise may be reduced to a minimum value of 0, but reality of the human voice may be lost. Therefore, noise may alternatively be partially suppressed.

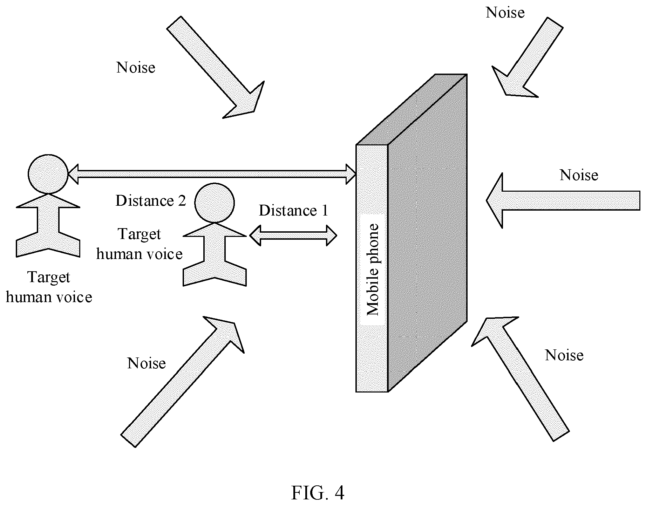

A typical application scenario of the present invention is shown in FIG. 4. When a terminal device, for example, a mobile phone is used in a video recording process, if it is detected that a target human voice appears in a picture or it is determined that a recorded scenario is a human voice scenario (that is, there is a face of a person in the picture of the recorded video, and a voice signal/a human voice signal exists in an environment in which the terminal is located), noise in a recording environment is suppressed, and the human voice (namely, the voice signal) is highlighted. For example, when a position of the person changes, for example, changes from a relatively close distance 1 to a relatively far distance 2, a human voice volume received by a microphone of the mobile phone is reduced. Consequently, human voice recognizability is reduced. In this case, adaptive zoom processing in the present invention may be triggered, and enhancement processing is performed on the human voice that has become weak. Recording scenarios are adaptively distinguished. This can effectively improve subjective listening experience of recorded audio in different scenarios.

Problems to be resolved in the present invention are summarized as follows.

(1) During recording, recording scenarios are adaptively distinguished. In a non-human voice scenario that requires fidelity recording, noise reduction is first performed on a target voice source before audio zoom is implemented, and then to reduce interference caused by noise to the target voice source. In a human voice recording scenario, the human voice and the noise are first separated, and then zoom enhancement is separately performed on the human voice, to improve human voice intensity while keeping the noise stable. This increases a signal-to-noise ratio and improves subjective listening experience of the human voice.

(2) For most common human voice zoom in audio zoom, the present invention provides an adaptive zoom method. According to the method, adaptive human voice zoom is implemented by estimating a distance between a recorded human voice and a mobile phone without depending on an external input. This frees a user from a manual input and eliminates a misoperation caused by the manual input. In addition, this makes a sound change caused by movement of a person in a video more coordinated.

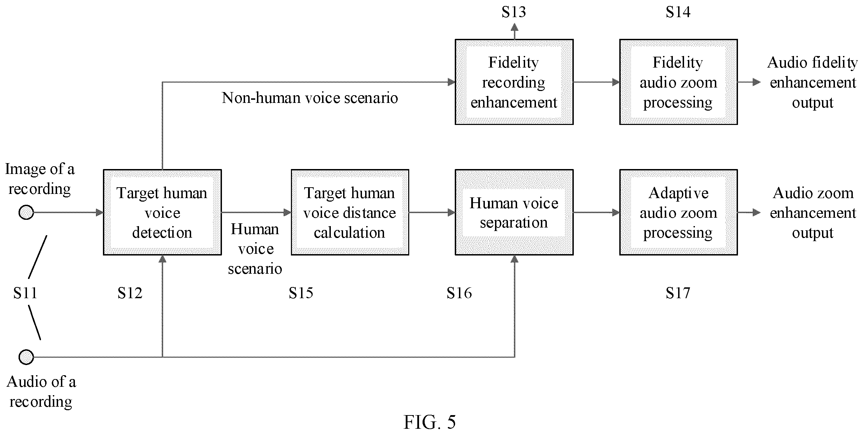

For a voice processing method provided in the present invention, refer to FIG. 5. The technical solution is implemented as follows.

S11: When a user records a shooting scene by using an intelligent shooting terminal (for example, a mobile phone/a camera/a tablet computer), the terminal records video information (multi-frame image data) in the shooting scene, and also records audio information (a voice signal) in a shooting environment.

S12: Perform target human voice detection, to further determine whether the current shooting environment belongs to a human voice scenario or a non-human voice scenario.

When a speaker appears in a currently recorded picture (that is, a current video frame includes a face, and a current audio frame includes a voice component), it is recognized as the human voice scenario. When a speaker does not appear in a currently recorded picture, it is recognized as the non-human voice scenario, that is, a current video frame or image does not include a face, or a current audio frame does not include a human voice. The non-human voice scenario may include a music environment.

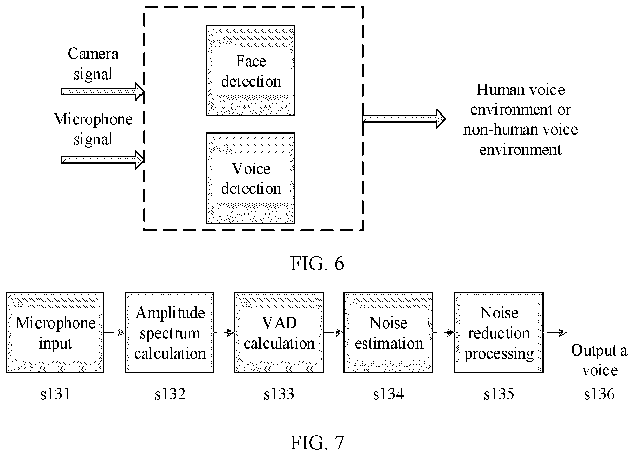

In a specific implementation process, the method shown in FIG. 6 may be used to perform target human voice detection, perform face detection based on an input image captured by a video recording camera, and perform voice detection based on a voice input by a microphone. The face detection and the voice detection may use mature related technologies in the industry, and are not limited and described in detail in the present invention. When a detection result is that the currently captured image includes a face and the currently captured voice includes a voice, it is considered that the scenario is the human voice scenario. Otherwise, it is determined that the scenario is the non-human voice scenario.

It should be understood that the terminal may have a specific detection capability during face detection. For example, a face image needs to reach specific definition and an area can be recognized. If the definition is relatively low or the area is very small (that is, the face image is far away from the camera), the face image may not be recognized.

For the non-human voice scenario, fidelity recording enhancement described in the following step S13 may be used, and then fidelity audio zoom processing in step S14 is performed, to implement audio fidelity enhancement processing. For the human voice scenario, audio zoom enhancement may be implemented by using the method described in the following steps S15: target human voice distance estimation, S16: human voice separation, and S17: adaptive audio zoom processing.

S13: Perform fidelity recording enhancement.

Specifically, as shown in FIG. 7, S13 may include s131 to s136.

s131: A microphone: one of microphones (3), (6), and (7) shown in FIG. 3 may be selected or any one of microphones (1) to (9) shown in FIG. 3 may be selected.

s132: Perform amplitude spectrum calculation: Change a voice input signal of a current frame picked up by the microphone to a frequency domain signal, where an amplitude spectrum is a root of a power spectrum, and a calculation formula of the amplitude spectrum is as follows:

$$Mag(i) = \sqrt{X_{real}(i) * X_{real}(i) + X_{imag}(i) * X_{imag}(i)}$$

In the foregoing formula, $X$ represents a frequency-domain signal, *Xreal* represents a real part, and *Ximag* represents an imaginary part.

Because operations of this algorithm are all based on a sub-band (one audio frame can be divided into a plurality of sub-bands), an average amplitude of the sub-band needs to be calculated. A formula is as follows:

$$BarkMag(i) = \frac{1}{K_i - K_{j-1}} \sum_{j=K_{i-1}}^{K_i} Mag(j)$$

In the foregoing formula, BarkMag represents a sub-band amplitude spectrum, and K represents a frequency bin number of a divided sub-band.

s133: Perform VAD (Voice Activity Detection) calculation.

Step 1: Update a maximum/minimum value of each sub-band, where that the maximum/minimum value of the sub-band is updated includes updating a maximum value and a minimum value. An update principle herein is as follows.

The maximum value is updated: If energy of a current sub-band is greater than the maximum value, the maximum value is directly set to a current value; or if energy of a current sub-band is less than or equal to the maximum value, the maximum value smoothly decreases, and this may be calculated by using an $\alpha$ smoothing method.

The minimum value is updated: If energy of a current sub-band is less than the minimum value, the minimum value is directly set to a current value; or

if energy of a current sub-band is greater than the minimum value, the minimum value slowly increases, and this may be calculated by using an $\alpha$ method.

Step 2: Calculate an average value of minimum values. The calculation is as follows:

$$MinMean = \frac{1}{BARK} \sum_{j=1}^{BARK} MinBark(j)$$

In the foregoing formula, MinMean represents the average value of the minimum values, BARK represents a quantity of sub-bands corresponding to one audio frame, and MinBark represents a minimum value of each sub-band.

In this algorithm, a sub-band whose energy is less than a first preset threshold is discarded during average value calculation, and this part may be understood as a noise sub-band, to avoid impact on sub-band VAD decision caused by a voice upsampling part without a signal.

Step 3: Sub-band VAD decision.

When a sub-band satisfies both *MaxBark(i) < $\alpha$ * MinBark(i)* and *MaxBark (i) < $\alpha$ * MinMean* , the sub-band is determined as the noise sub-band. In this algorithm, a sub-band whose energy is less than the first preset threshold is also determined as the noise sub-band. It is assumed that a quantity of sub-bands determined as noise sub-bands is NoiseNum. If NoiseNum is greater than a second preset threshold, the current frame is determined as a noise frame. Otherwise, the current frame is determined as a voice frame.

s134: Perform noise estimation.

Noise estimation is performed in an $\alpha$ smoothing manner, and a noise spectrum calculation formula is as follows:

$$NoiseMag(i) = \alpha * NoiseMag(i) + (1-\alpha) * UpDataMag(i)$$

$\alpha$ is determined based on a VAD result, NoiseMag(i) represents a noise spectrum of a historical frame, and UpDataMag(i) represents a noise spectrum of a current frame.

s135: Perform noise reduction processing.

A gain of each sub-band is calculated based on a historical noise spectrum and a current signal amplitude spectrum. A gain calculation method may be a DD gain calculation method in the conventional technology. The noise reduction processing refers to multiplying a spectrum on which FFT is performed by a corresponding sub-band gain.

$$X_{real}(i) = X_{real}(i) * gain(i)$$

$$X_{imag}(i) = X_{imag}(i) * gain(i)$$

s136: After noise reduction processing is performed, IFFT needs to be performed to convert the frequency-domain signal into a time-domain signal, that is, to output a voice.

S14: Perform fidelity audio zoom processing.

An existing DRC (Dynamic range control) algorithm may be used for processing, and different DRC curves are designed based on different focal length information. For a same input signal, a larger focal length indicates a larger gain. A corresponding DRC curve is determined based on a focal length during video shooting, and a corresponding gain value is determined in the foregoing corresponding DRC curve based on a level of the time-domain signal output in s136. Gain adjustment is performed on the level of the time-domain signal output in s136 based on a target gain, to obtain an enhanced output level.

S15: Perform target human voice distance (distance) calculation.

Specifically, S15 may include s151 to s152.

s151: Determine a target face, that is, determine a most dominant or most possible person who makes a sound in a current environment.

If it is detected in S12 that only one face exists in the current video frame, the face is determined as the target face. If it is detected in S12 that a plurality of faces exist in the current video frame, a face with a largest area is determined as the target face. If it is detected in S12 that a plurality of faces exist in the current video frame, a face closest to the terminal is determined as the target face.

s152: Determine a distance (distance) between the target face and the terminal.

A calculation method includes manner 1. Other examples methods are also provided.

Manner 1: A region area of the target face is calculated, a ratio of the region area of the target face to a screen of the mobile phone, namely, a face-to-screen ratio of the target face, is calculated, and an actual distance between the target face and the terminal is calculated based on the face-to-screen ratio of the target face. Specifically, a correspondence between an empirical value of a face-to-screen ratio of a face and an empirical value of a distance between the face and the terminal may be obtained through historical statistics or an experiment. A distance between the target face and the terminal may be obtained based on the correspondence and an input of the face-to-screen ratio of the target face.

Manner 2: A region area of the target face is calculated, and a distance between the target face and the terminal is obtained based on a function relationship between a region area of a face and a distance between the face and the terminal.

Manner 3: Two inputs of a dual-camera mobile phone are used to perform bijective ranging, and a distance between the target face and the terminal is calculated.

Manner 4: A depth component, for example, a structured light component, in the terminal is used to measure a distance between the target face and the terminal.

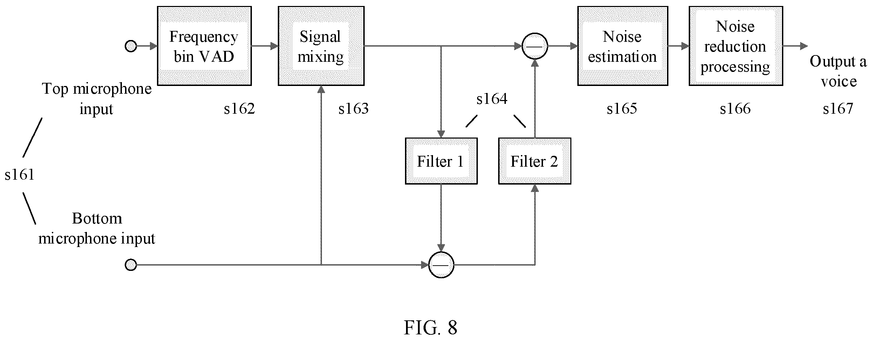

S16: Perform human voice separation: Separate a human voice signal (a voice signal) from a voice signal. This may also be understood as dividing the voice signal into a human voice part and a non-human voice part. It should be understood that the human voice separation is a common concept in this field, and complete separation between a human voice and a non-human voice is not limited thereto. Specific steps are shown in FIG. 8. In an implementation process, a signal collected by a top microphone and a signal collected by a bottom microphone may be used to perform human voice separation. The microphone (3) in FIG. 3 may be selected as the top microphone, and the microphone (6) in FIG. 3 may be selected as the bottom microphone. In another possible design, signals collected by other two microphones in FIG. 3 may alternatively be selected to perform human voice separation. At least one of top microphones (1), (2), and (3), and at least one of bottom microphones (6), (7), (8), and (9) are included, to achieve a similar effect. Specifically, S16 may include s161 to s167.

s161: Collect a preset microphone signal.

The signal collected by the top microphone and the signal collected by the bottom microphone are received.

s162: Frequency bin VAD.

A harmonic position of a spectrum of the top microphone is obtained through harmonic searching, and the VAD may be used to mark a harmonic position of a voice. For example, if the VAD is set to 1, it indicates that a current frequency bin is a voice; or if the VAD is set to 0, it indicates that a frequency bin is a non-voice. A marking method of a flag bit is not limited in this embodiment of the present invention, and may be flexibly determined based on a design idea of a user. The harmonic searching can use an existing technology in the industry, for example, a cepstrum method or autocorrelation method.

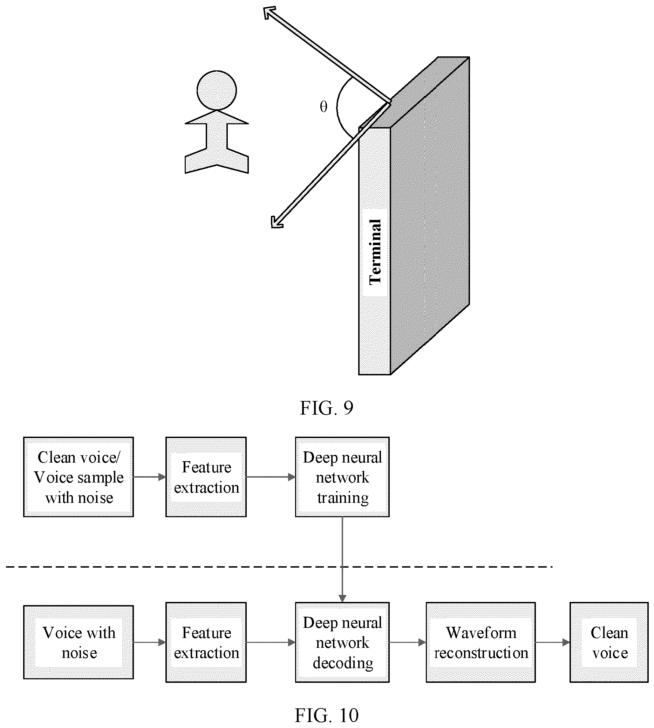

In a specific implementation process, when the terminal includes both microphones (1) and (2) shown in FIG. 3, a directional beam is formed by using a relatively common GCC (General Cross Correlation) voice source positioning method, so that out-of-beam interference can be effectively suppressed. As shown in FIG. 9, a voice signal beyond a θ angle range may be further identified as a non-voice signal. The θ range is determined based on factors such as a voice speed, a microphone spacing, and a sampling rate.

s163: Signal mixing.

The input signal of the top microphone and the input signal of the bottom microphone are changed to the frequency domain signal. A ratio of an amplitude spectrum AmpBL of the bottom microphone to an amplitude spectrum AmpTop of the top microphone is calculated to obtain a signal enhancement coefficient Framecoef. The enhancement coefficient is multiplied by a spectrum of the top microphone to obtain a mixed signal. Framecoef is specifically calculated as follows:

$$Framecoef = 1 + \frac{AmpBL}{AmpTop}$$

s164: Separate a voice and noise by using a filtering method.

In the present invention, a state space-based frequency-domain filter can be used. Each channel is calculated independently. Therefore, a frequency bin index is omitted in the following description. An input signal of the filter may be represented by using a vector $\overline{X}_{(t)} = [X_{(t)}, \ldots, X_{(t-L+1)}]$ whose length is L, and the input signal includes L frames, where L is any positive integer. When L is greater than 1, the L frames may be consecutive frames, and t is corresponding to a frequency. A vector $\overline{W}_{(t-1)} = [W_1, \ldots, W_L]^T$ represents a linear transformation coefficient obtained by inputting $\overline{X}_{(t)}$ to an estimated one-dimensional target desired signal $D_{(t)}$.

An output of the filter, namely, a residual of the filter, is represented as follows:

$$E_{(t)} = D_{(t)} - \overline{X}_{(t)}\overline{W}_{(t-1)}$$

A filter 1 is used only when a voice signal exists. For example, when a VAD value is 1, refreshing is performed. An input signal is the mixed signal, an expected signal is a signal of the bottom microphone, and an output signal is a noise signal Z.

A filter 2 may be used in real time. An input signal is a noise signal, an expected signal is the mixed signal, and an output signal is a voice signal S.

Both the filter 1 and the filter 2 may use the foregoing state space-based frequency-domain filter (State-Space FDAF).

s165: Perform noise estimation.

The VAD is used to exclude a voice frequency bin, estimate a noise level in S and Z separately, and then calculate a noise deviation to obtain a deviation factor. The deviation factor is compensated for the noise signal Z, to obtain a noise level $Z_{out}$ of the mixed signal. For the noise estimation in this step, refer to a method that is the same as or similar to the method in s134.

s166: Perform noise reduction processing.

Finally, a gain is calculated, and a clean voice $S_{out}$ is finally obtained based on the voice signal S.

In this step, an existing deep neural network (DNN) method in the industry may be used. As shown in FIG. 10, the input signal of the top microphone is used as a voice input including noise, and the clean voice $S_{out}$ is output by using a DNN-enhanced noise reduction method (including feature extraction, deep neural network decoding, waveform reconstruction, and the like).

For a noise reduction processing algorithm in this step, refer to a method that is the same as or similar to the method in s135.

s167: Output a voice.

After noise reduction processing is performed, IFFT needs to be performed to convert a frequency-domain signal into a time-domain signal s'$_{out}$, that is, to output the voice.

S17: Adaptive audio zoom processing.

Specifically, S17 may include s171 to s173.

s171: Design different DRC curves based on different distance values. For a same input signal, a larger distance indicates a larger gain.

s172: Determine a corresponding DRC curve based on the distance obtained in step S15, and determine a corresponding gain value, namely, a target gain, on the corresponding DRC curve based on a level of s'$_{out}$.

s173: Perform gain adjustment on a level value of s'$_{out}$ based on the target gain to obtain an enhanced output level, namely, a target voice signal.

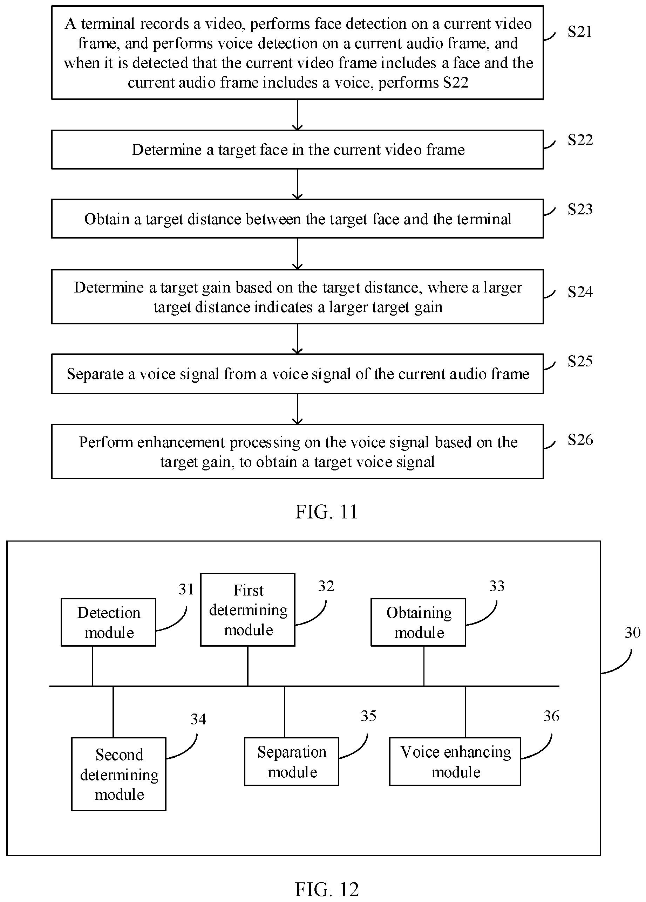

FIG. 11 is a method flowchart of an optional embodiment of the present invention. This embodiment of the present invention provides a voice processing method. The method includes the following steps (S21 to S26).

S21: A terminal records a video, performs face detection on a current video frame, and performs voice detection on a current audio frame, and when it is detected that the current video frame includes a face and the current audio frame includes a voice, performs S22. For a specific implementation of S21, refer to a part or all of the descriptions of S11 and S12.

S22: Determine a target face in the current video frame. For a specific implementation of S22, refer to a part or all of the descriptions of s151.

S23: Obtain a target distance between the target face and the terminal. For a specific implementation of S22, refer to a part or all of the descriptions of s152.

S24: Determine a target gain based on the target distance, where a larger target distance indicates a larger target gain. For a specific implementation of S24, refer to a part or all of the descriptions of s171 and s172.

S25: Separate a voice signal from a voice signal of the current audio frame. For a specific implementation of S25, refer to a part of the descriptions of S16, to obtain $S_{out}$ in s166 or $S'_{out}$ in s167.

S26: Perform enhancement processing on the voice signal based on the target gain, to obtain a target voice signal. For a specific implementation of S25, refer to a part or all of the descriptions of s173. In a possible implementation, the target gain is less than a preset threshold, for example, 15 dB or 25 dB. This is not limited in the present invention. In some scenarios, the voice signal may be purposefully weakened. In this case, the target gain may alternatively be less than 0 dB, and may be greater than a preset threshold, for example, -15 dB or -25 dB. This is not enumerated and limited in the present invention.

Optionally, the method may further include S27 to S29.

S27: Separate a non-voice signal from the voice signal of the current audio frame. For a specific implementation of S25, refer to a part of the descriptions of S16, to obtain $Z_{out}$ similar to $Z_{out}$ in s166, or convert $Z_{out}$ into a time-domain signal $Z'_{out}$.

S28: Weaken the non-voice signal based on a preset noise reduction gain, to obtain a target noise signal, where the preset noise reduction gain is less than 0 dB. In other words, a preset amplitude of the non-voice signal is reduced, for example, only 25%, 10%, or 5% of an original amplitude is retained, and an extreme value is 0%. This is not exhaustive or limited in the present invention. In a possible implementation, the preset noise reduction gain may be less than -12 dB.

S29: Synthesize the target voice signal and the target noise signal, to obtain a target voice signal of a current frame.

The present invention provides the voice processing method. In a human voice scenario, when the terminal records a video, technologies such as face detection and voice detection are used to perform voice noise separation on a voice signal. Then, voice can be separately enhanced based on estimation of a distance between a face and a mobile phone without depending on a user input. In this way, adaptive zoom enhancement of the voice is implemented, environmental noise is reduced, and stability of noise in a zoom process is maintained.

Based on the voice processing method provided in the foregoing embodiment, an embodiment of the present invention provides a voice processing apparatus 30. The apparatus 30 may be applied to a plurality of terminal devices, may be in any implementation form of the terminal 100, and has a video shooting function and a voice pickup function. As shown in FIG. 12, the apparatus 30 includes a detection module 31, a first determining module 32, an obtaining module 33, a second determining module 34, a separation module 35, and a voice enhancement module 36.

The detection module 31 is configured to: when a terminal records a video, perform face detection on a current video frame, and perform voice detection on a current audio frame. The detection module 31 may be implemented by a processor by invoking corresponding program instructions to control a camera to capture an image and control a microphone to collect a voice, and perform analysis processing on image data and voice data.

The first determining module 32 is configured to: when the detection module detects that the current video frame includes a face and that the current audio frame includes a voice, determine a target face in the current video frame. The first determining module 32 may be implemented by the processor by invoking program instructions in a memory to analyze the image.

The obtaining module 33 is configured to obtain a target distance between the target face and the terminal. The obtaining module 33 may be implemented by the processor by invoking a depth sensor and a ranging sensor, or analyzing and processing the image data to perform calculation.

The second determining module 34 is configured to determine a target gain based on the target distance, where a larger target distance indicates a larger target gain. The second determining module 34 may be implemented by the processor by invoking corresponding program instructions to perform processing based on a specific algorithm.

The separation module 35 is configured to separate a voice signal from a voice signal of the current audio frame. The separation module 35 may be implemented by the processor by invoking corresponding program instructions to process the voice signal based on a specific algorithm. In a specific implementation process, the separation module 35 may be further configured to separate a non-voice signal from the voice signal of the current audio frame.

The voice enhancement module 36 is configured to perform enhancement processing on the voice signal based on the target gain, to obtain a target voice signal. The voice enhancement module 36 may be implemented by the processor by invoking corresponding program instructions to process the voice signal based on a specific algorithm.

Optionally, the apparatus may further include a noise reduction module 37, configured to weaken the non-voice signal based on a preset noise reduction gain, to obtain a target noise signal.

The apparatus may further include a synthesis module 38. The synthesis module is configured to synthesize the target voice signal and the target noise signal, to obtain a target voice signal of a current frame.

In a specific implementation process, the detection module 31 is specifically configured to perform the method mentioned in S21 and a method that can be equivalently replaced. The first determining module 32 is specifically configured to perform the method mentioned in S22 and a method that can be equivalently replaced. The obtaining module 33 is specifically configured to perform the method mentioned in S23 and a method that can be equivalently replaced. The second determining module 34 is specifically configured to perform the method mentioned in S24 and a method that can be equivalently replaced. The separation module 35 is specifically configured to perform the method mentioned in S25 and a method that can be equivalently replaced. The voice enhancement module 36 is specifically configured to perform the method mentioned in S26 and a method that can be equivalently replaced.

Optionally, the separation module 35 is further specifically configured to perform the method mentioned in S27 and a method that can be equivalently replaced. The noise reduction module 37 is specifically configured to perform the method mentioned in S28 and a method that can be equivalently replaced. The synthesis module 38 is specifically configured to perform the method mentioned in S29 and a method that can be equivalently replaced.

It should be understood that the foregoing specific method embodiments, explanations and descriptions of technical features in the embodiments, and extensions of a plurality of implementations are also applicable to method execution in the apparatus, and details are not described in the apparatus embodiment.

It should be understood that division into the modules in the foregoing apparatus 30 is merely logical function division. In an actual implementation, some or all of the modules may be integrated into one physical entity, or may be physically separated. For example, each of the foregoing modules may be a separate processing element, or may be integrated on a chip of a terminal, or may be stored in a storage element of a controller in a form of program code. A processing element of the processor invokes and executes a function of each of the foregoing modules. In addition, the modules may be integrated or may be implemented independently. The processing element herein may be an integrated circuit chip and has a signal processing capability. In an implementation process, steps in the foregoing methods or the foregoing modules may be implemented by using a hardware integrated logical circuit in the processing element, or by using an instruction in a form of software. The processing element may be a general-purpose processor, for example, a central processing unit (English: central processing unit, CPU for short), or may be one or more integrated circuits configured to implement the foregoing methods, for example, one or more application-specific integrated circuits (English: application-specific integrated circuit, ASIC for short), or one or more digital signal processors (English: digital signal processor, DSP for short), or one or more field programmable gate arrays (English: field programmable gate array, FPGA for short).

It should be understood that in the specification, claims, and accompanying drawings of the present invention, the terms "first", "second", and the like are intended to distinguish similar objects but do not necessarily indicate a specific order or sequence. It should be understood that the data termed in such a way is interchangeable in a proper circumstance, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or any other programmable data processing device, so that a series of operations and steps are performed on the computer or the any other programmable device, thereby generating computer-implemented processing. Therefore, the instructions executed on the computer or the any other programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the appended claims are intended to be construed as to cover the listed embodiments and all changes and modifications falling within the scope of the present invention. It is clear that, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

**Claims**

1. A voice processing method, wherein the method comprises:

   when a terminal makes a video call or records a video, if a current video picture comprises a face, and a voice exists in a current environment,
   determining a target face in the current video picture;
   obtaining a target distance between the target face and the terminal;
   determining a target gain based on the target distance, wherein a larger target distance indicates a larger target gain; and
   performing enhancement processing on the voice based on the target gain, to obtain a target voice signal;
   **characterized in that** the obtaining a target distance between the target face and the terminal comprises:
   obtaining the target distance between the target face and the terminal based on a face-to-screen ratio of a face in the current video picture.

2. The method according to claim 1, wherein the method further comprises:
   weakening a non-voice signal in the current environment based on a preset noise reduction gain, to obtain a target noise signal.

3. The method according to claim 1 or 2, wherein the determining a target face in the current video picture comprises:

   if a plurality of faces exist in the current video picture, determining a face with a largest area as the target face;
   if a plurality of faces exist in the current video picture, determining a face closest to the terminal as the target face; or
   if only one face exists in the current video picture, determining the face as the target face.

4. A voice processing apparatus, wherein the apparatus comprises:

   a detection module, configured to: when a terminal makes a video call or records a video, perform face detection on a current video picture, and perform voice detection on audio in a current environment;
   a first determining module, configured to: when the detection module detects that the current video picture comprises a face and that the current environment comprises a voice, determine a target face in the current video picture;
   an obtaining module, configured to obtain a target distance between the target face and the terminal;
   a second determining module, configured to determine a target gain based on the target distance, wherein a larger target distance indicates a larger target gain; and
   a voice enhancement module, configured to perform enhancement processing on the voice based on the target gain, to obtain a target voice signal;
   **characterized in that** the obtaining module is specifically configured to:
   obtain the target distance between the target face and the terminal based on a face-to-screen ratio of a face in the current video picture.

5. The apparatus according to claim 4, wherein the apparatus further comprises a noise reduction module, wherein the noise reduction module is configured to weaken a non-voice signal in the current environment based on a preset noise reduction gain, to obtain a target noise signal

6. The apparatus according to claim 4 or 5, wherein the first determining module is specifically configured to:

if a plurality of faces exist in the current video picture, determine a face with a largest area as the target face;
if a plurality of faces exist in the current video picture, determine a face closest to the terminal as the target face; or
if only one face exists in the current video picture, determine the face as the target face.

7. A terminal device, wherein the terminal device comprises a memory, a processor, a bus, a camera, and a microphone, wherein the memory, the camera, the microphone, and the processor are connected through the bus;

the camera is configured to capture an image signal under control of the processor;
the microphone is configured to collect a voice signal under control of the processor;
the memory is configured to store computer programs and instructions; and
the processor is configured to invoke the computer programs and the instructions that are stored in the memory, to control the camera and the microphone; and is further specifically configured to enable the terminal device to perform the method according to any one of claims 1 to 3.

8. The terminal device according to claim 7, wherein the terminal device further comprises an antenna system, and the antenna system receives and sends, under control of the processor, a wireless communication signal to implement wireless communication with a mobile communications network, wherein the mobile communications network comprises one or more of the following: a GSM network, a CDMA network, a 3G network, a 4G network, a 5G network, an FDMA network, a TDMA network, a PDC network, a TACS network, an AMPS network, a WCDMA network, a TD SCDMA network, a Wi-Fi network, and an LTE network.

**Patentansprüche**

1. Verfahren zur Stimmverarbeitung, wobei das Verfahren Folgendes umfasst:

wenn ein Endgerät einen Videoanruf tätigt oder ein Video aufzeichnet, falls ein aktuelles Videobild ein Gesicht umfasst und eine Stimme in einer aktuellen Umgebung vorhanden ist,
Bestimmen eines Zielgesichts in dem aktuellen Videobild;
Erlangen einer Zielentfernung zwischen dem Zielgesicht und dem Endgerät;
Bestimmen einer Zielverstärkung basierend auf der Zielentfernung, wobei eine größere Zielentfernung eine größere Zielverstärkung angibt; und
Durchführen einer Verbesserungsverarbeitung der Stimme basierend auf der Zielverstärkung, um ein Zielstimmsignal zu erlangen;
**dadurch gekennzeichnet, dass** das Erlangen einer Zielentfernung zwischen dem Zielgesicht und dem Endgerät Folgendes umfasst:
Erlangen der Zielentfernung zwischen dem Zielgesicht und dem Endgerät basierend auf einem Gesichts-zu-Bildschirm-Verhältnis eines Gesichts in dem aktuellen Videobild.

2. Verfahren gemäß Anspruch 1, wobei das Verfahren ferner Folgendes umfasst:
Schwächen eines Nicht-Stimmsignals in der aktuellen Umgebung basierend auf einer voreingestellten Rauschunterdrückungsverstärkung, um ein Zielrauschsignal zu erlangen.

3. Verfahren gemäß Anspruch 1 oder 2, wobei das Bestimmen eines Zielgesichts in dem aktuellen Videobild Folgendes umfasst:

falls eine Vielzahl von Gesichtern in dem aktuellen Videobild vorhanden ist, Bestimmen eines Gesichts mit einer größten Fläche als das Zielgesicht;
falls eine Vielzahl von Gesichtern in dem aktuellen Videobild vorhanden ist, Bestimmen eines Gesichts, das dem Endgerät am nächsten ist, als das Zielgesicht; oder

falls nur ein Gesicht in dem aktuellen Videobild vorhanden ist, Bestimmen des Gesichts als das Zielgesicht.

4. Gerät zur Stimmverarbeitung, wobei das Gerät Folgendes umfasst:

ein Erkennungsmodul, das zu Folgendem konfiguriert ist: wenn ein Endgerät einen Videoanruf tätigt oder ein Video aufzeichnet, Durchführen einer Gesichtserkennung auf einem aktuellen Videobild und Durchführen einer Stimmerkennung auf Audio in einer aktuellen Umgebung;
ein erstes Bestimmungsmodul, das zu Folgendem konfiguriert ist:

wenn das Erkennungsmodul erkennt, dass das aktuelle Videobild ein Gesicht umfasst und dass die aktuelle Umgebung eine Stimme umfasst, Bestimmen eines Zielgesichts in dem aktuellen Videobild;
ein Erlangungsmodul, das dazu konfiguriert ist, eine Zielentfernung zwischen dem Zielgesicht und dem Endgerät zu erlangen;
ein zweites Bestimmungsmodul, das dazu konfiguriert ist, eine Zielverstärkung basierend auf der Zielentfernung zu bestimmen, wobei eine größere Zielentfernung eine größere Zielverstärkung angibt; und
ein Stimmverbesserungsmodul, das dazu konfiguriert ist, eine Verbesserungsverarbeitung der Stimme basierend auf der Zielverstärkung durchzuführen, um ein Zielstimmsignal zu erlangen;
**dadurch gekennzeichnet, dass** das Erlangungsmodul speziell zu Folgendem konfiguriert ist:
Erlangen der Zielentfernung zwischen dem Zielgesicht und dem Endgerät basierend auf einem Gesichts-zu-Bildschirm-Verhältnis eines Gesichts in dem aktuellen Videobild.

5. Gerät gemäß Anspruch 4, wobei das Gerät ferner ein Rauschunterdrückungsmodul umfasst, wobei das Rauschunterdrückungsmodul dazu konfiguriert ist, ein Nicht-Stimmsignal in der aktuellen Umgebung basierend auf einer voreingestellten Rauschunterdrückungsverstärkung zu schwächen, um ein Zielrauschsignal zu erlangen.

6. Gerät gemäß Anspruch 4 oder 5, wobei das erste Bestimmungsmodul speziell zu Folgendem konfiguriert ist:

falls eine Vielzahl von Gesichtern in dem aktuellen Videobild vorhanden ist, Bestimmen eines Gesichts mit einer größten Fläche als das Zielgesicht;
falls eine Vielzahl von Gesichtern in dem aktuellen Videobild vorhanden ist, Bestimmen eines Gesichts, das dem Endgerät am nächsten ist, als das Zielgesicht; oder
falls nur ein Gesicht in dem aktuellen Videobild vorhanden ist, Bestimmen des Gesichts als das Zielgesicht.

7. Endgerätvorrichtung, wobei die Endgerätvorrichtung einen Speicher, einen Prozessor, einen Bus, eine Kamera und ein Mikrofon umfasst, wobei der Speicher, die Kamera, das Mikrofon und der Prozessor über den Bus verbunden sind;

die Kamera dazu konfiguriert ist, ein Bildsignal unter der Steuerung des Prozessors zu erfassen;
das Mikrofon dazu konfiguriert ist, ein Stimmsignal unter der Steuerung des Prozessors zu gewinnen;
der Speicher dazu konfiguriert ist, Computerprogramme und Anweisungen zu speichern; und
der Prozessor dazu konfiguriert ist, die Computerprogramme und die Anweisungen, die in dem Speicher gespeichert sind, aufzurufen, um die Kamera und das Mikrofon zu steuern; und ferner speziell dazu konfiguriert ist, die Endgerätvorrichtung in die Lage zu versetzen, das Verfahren gemäß einem der Ansprüche 1 bis 3 durchzuführen.

8. Endgerätvorrichtung gemäß Anspruch 7, wobei die Endgerätvorrichtung ferner ein Antennensystem umfasst und das Antennensystem unter der Steuerung des Prozessors ein drahtloses Kommunikationssignal empfängt und sendet, um eine drahtlose Kommunikation mit einem Mobilkommunikationsnetzwerk umzusetzen, wobei das Mobilkommunikationsnetzwerk eines oder mehrere der Folgenden umfasst: ein Netzwerk des globalen Systems für mobile Kommunikation (global system for mobile communications, GSM), ein Netzwerk für Codemultiplexverfahren (code division multiple access, CDMA), ein 3G-Netzwerk, ein 4G-Netzwerk, ein 5G-Netzwerk, ein Netzwerk für Frequenzmultiplexverfahren (frequency-division multiple access, FDMA), ein Netzwerk für Zeitmultiplexverfahren (time division multiple access, TDMA), ein PDC-Netzwerk (personal digital cellular, PDC), ein Netzwerk für Kommunikationssystem mit vollständigem Zugang (total access communication System, TACS), ein Netzwerk für erweitertes Mobiltelefonsystem (advanced mobile phone service, AMPS), ein Netzwerk für Breitband-CDMA (wideband CDMA, WCDMA), ein Netzwerk für Synchrones CDMA mit Zeiteinteilung (time division synchronous CDMA, TDSCDMA), ein Netzwerk für drahtlose Fidelität (wireless fidelity, Wi-Fi) und ein Netzwerk für langfristige Entwicklung (long term evolution, LTE).

**Revendications**

1. Procédé de traitement de voix, dans lequel le procédé comprend :

   lorsqu'un terminal effectue un appel vidéo ou enregistre une vidéo, si une image vidéo actuelle comprend un visage, et une voix existe dans un environnement actuel,
   la détermination d'un visage cible dans l'image vidéo actuelle ;
   l'obtention d'une distance cible entre le visage cible et le terminal ;
   la détermination d'un gain cible sur la base de la distance cible, dans lequel une distance cible plus grande indique un gain cible plus grand ; et
   la réalisation d'un traitement d'amélioration sur la voix sur la base du gain cible, pour obtenir un signal vocal cible ;
   **caractérisé en ce que** l'obtention d'une distance cible entre le visage cible et le terminal comprend :
   l'obtention de la distance cible entre le visage cible et le terminal sur la base d'un rapport visage/écran d'un visage dans l'image vidéo actuelle.

2. Procédé selon la revendication 1, dans lequel le procédé comprend également :
   l'affaiblissement d'un signal non vocal dans l'environnement actuel sur la base d'un gain de réduction de bruit prédéfini, pour obtenir un signal de bruit cible.

3. Procédé selon la revendication 1 ou 2, dans lequel la détermination d'un visage cible dans l'image vidéo actuelle comprend :

   si une pluralité de visages existent dans l'image vidéo actuelle, la détermination d'un visage avec une plus grande surface comme visage cible ;
   si une pluralité de visages existent dans l'image vidéo actuelle, la détermination d'un visage le plus proche du terminal comme visage cible ; ou
   si un seul visage existe dans l'image vidéo actuelle, la détermination du visage comme visage cible.

4. Appareil de traitement de voix, dans lequel l'appareil comprend :

   un module de détection, configuré pour : lorsqu'un terminal effectue un appel vidéo ou enregistre une vidéo, réaliser une détection de visage sur une image vidéo actuelle, et réaliser une détection de voix sur l'audio dans un environnement actuel ;
   un premier module de détermination, configuré pour : lorsque le module de détection détecte que l'image vidéo actuelle comprend un visage et que l'environnement actuel comprend une voix, déterminer un visage cible dans l'image vidéo actuelle ;
   un module d'obtention, configuré pour obtenir une distance cible entre le visage cible et le terminal ;
   un second module de détermination, configuré pour déterminer un gain cible sur la base de la distance cible, dans lequel une distance cible plus grande indique un gain cible plus grand ; et
   un module d'amélioration de la voix, configuré pour réaliser un traitement d'amélioration sur la voix sur la base du gain cible, pour obtenir un signal vocal cible ;
   **caractérisé en ce que** le module d'obtention est spécifiquement configuré pour :
   obtenir la distance cible entre le visage cible et le terminal sur la base d'un rapport visage/écran d'un visage dans l'image vidéo actuelle.

5. Appareil selon la revendication 4, dans lequel l'appareil comprend également un module de réduction de bruit, dans lequel le module de réduction du bruit est configuré pour affaiblir un signal non vocal dans l'environnement actuel sur la base d'un gain de réduction du bruit prédéfini, pour obtenir un signal de bruit cible.

6. Appareil selon la revendication 4 ou 5, dans lequel l'unité de détermination est configurée spécifiquement pour :

   si une pluralité de visages existent dans l'image vidéo actuelle, déterminer un visage avec une plus grande surface comme visage cible ;
   si une pluralité de visages existent dans l'image vidéo actuelle, déterminer un visage le plus proche du terminal comme visage cible ; ou
   si un seul visage existe dans l'image vidéo actuelle, déterminer le visage comme visage cible.

7. Dispositif terminal, dans lequel le dispositif terminal comprend une mémoire, un processeur, un bus, une caméra et un microphone, dans lequel la mémoire, la caméra, le microphone et le processeur sont connectés via le bus ;

la caméra est configurée pour capturer un signal d'image sous la commande du processeur ;
le microphone est configuré pour collecter un signal vocal sous la commande du processeur ;
la mémoire est configurée pour stocker les programmes informatiques et instructions ; et
le processeur est configuré pour invoquer les programmes informatiques et les instructions qui sont stockés dans la mémoire, pour commander la caméra et le microphone ; et est également spécifiquement configuré pour permettre au dispositif terminal de réaliser le procédé selon l'une quelconque des revendications 1 à 3.

8. Dispositif terminal selon la revendication 7, dans lequel le dispositif terminal comprend également un système d'antenne, et le système d'antenne reçoit et envoie, sous la commande du processeur, un signal de communication sans fil pour mettre en œuvre une communication sans fil avec un réseau de communication mobile, dans lequel le réseau de communication mobile comprend un ou plusieurs des éléments suivants : un réseau GSM, un réseau CDMA, un réseau 3G, un réseau 4G, un réseau 5G, un réseau FDMA, un réseau TDMA, un réseau PDC, un réseau TACS, un réseau AMPS, un réseau WCDMA, un réseau TDSCDMA, un réseau Wi-Fi et un réseau LTE.

FIG. 1a

FIG. 1b

Terminal 100

110 — Radio frequency unit

Camera — 150

190

170 —

Power supply

180 — External interface

120 — Memory

Processor

160

Audio circuit

Speaker 161

Microphone 162

Headset jack — 163

Touchscreen — 131

130 — Input unit

Another input device

132

Display unit — 140

FIG. 2

FIG. 3

FIG. 4

S13    S14

Fidelity
recording
enhancement

Fidelity
audio zoom
processing

Audio fidelity
enhancement
output

Non-human voice scenario

Image of a
recording

Target human
voice
detection

Target human
voice distance
calculation

Human voice
separation

Adaptive
audio zoom
processing

Audio zoom
enhancement
output

Human
voice
scenario

Audio of a
recording

S11    S12    S15    S16    S17

FIG. 5

Camera
signal

Microphone
signal

Face
detection

Voice
detection

Human voice
environment or
non-human voice
environment

FIG. 6

Microphone
input

Amplitude
spectrum
calculation

VAD
calculation

Noise
estimation

Noise
reduction
processing

Output a
voice

s131          s132          s133          s134          s135          s136

FIG. 7

FIG. 8

FIG. 9

FIG. 10

A terminal records a video, performs face detection on a current video frame, and performs voice detection on a current audio frame, and when it is detected that the current video frame includes a face and the current audio frame includes a voice, performs S22 — S21

Determine a target face in the current video frame — S22

Obtain a target distance between the target face and the terminal — S23

Determine a target gain based on the target distance, where a larger target distance indicates a larger target gain — S24

Separate a voice signal from a voice signal of the current audio frame — S25

Perform enhancement processing on the voice signal based on the target gain, to obtain a target voice signal — S26

FIG. 11

Detection module — 31

First determining module — 32

Obtaining module — 33

30

Second determining module — 34

Separation module — 35

Voice enhancing module — 36

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015245133 A
- US 2015022636 A
- US 2012154632 A
- US 2003099370 A
- US 2014002574 A